# EUROPEAN PATENT SPECIFICATION

(11) **EP 0 677 317 B1**
(45) Date of publication and mention of the grant of the patent: **25.03.1998**
(21) Application number: 95105257.0
(22) Date of filing: 07.04.1995
(51) Int. Cl.: B01D 45/14, B01D 50/00

(54) **Process for treating fluids, in particular for the purification of environment polluting emissions, and equipment to carry out this process**
Behandlung von Fluiden, insbesondere das Reinigen von umweltschädlichen Emissionen, und Vorrichtung zu dessen Durchführung
Traitement des fluides, notamment la purification des émissions polluantes, et dispositif pour mettre en oeuvre ce procédé

(30) Priority: 15.04.1994 BR 9401502
(43) Date of publication of application: 18.10.1995
(73) Proprietor: Capulli, Giuseppe, Sao Cristovao, Rio de Janeiro, RJ (BR)
(72) Inventor: Capulli, Giuseppe, Sao Cristovao, Rio de Janeiro, RJ (BR)
(74) Representative: Giugni, Valter

(56) References cited:
- DE-A- 3 122 026
- DE-A- 3 315 477
- DE-U- 8 905 182
- FR-A- 2 071 197

## Description

The increasing manner in which modern society is becoming aware of such concepts as better quality of life and biosphere, process efficiency and rationalization of energy usage, has brought about new criteria, behaviour patterns and demands that have in turn induced the technical community to develop new products or re-engineer existing ones.

This trend has favoured the development, in the area of the treatment of environment polluting emissions, of a process and related equipment with high-performance capabilities in collecting and treating such polluting media as powders, gases, mists, vapours and odours that are emitted into the environment in general.

The operation of such equipment is based on a process made up by a harmonic combination of principles and embodiments, such as an action to dynamically mix the liquid and the polluting gas, implemented in a rotary construction adapted to promote an efficient transfer of polluting substances between the fluids involved, as well as to cause energetic and aeromechanical mass transfers to occur between substances, even if they are in different physical states.

The DE-A-3 122 026 describes the treatment of gas by spraying with liquid and subsequent centrifugation.

As typical characteristics of multimodal atmospheric pollution it is to be noticed that there simultaneously prevail different forms of emissions, consisting mainly of particulate materials with various gases, vapours and mists. This basic consideration, in addition to the mechanical requirements and restraints of the treatment process itself, such as air flow rate, overall energy loss (collectors, baffles, bends, conduits, equipment inner losses, chimneys, etc.), energy consumption, corrosion, temperature, physical-chemical compatibility, hydro-aerodynamic performance and flow treatment, has been the leading parameter at the basis of the concept of both the process and the equipment according to the invention.

Thus, the process according to the present invention is particularly suitable for the purification of environment polluting emissions; it includes the processing of fluids, including fluids in different states or phases as in the treatment of polluting gases, and it is characterized by a turbulent mixing of multiple fractions of processed fluids, thereby bringing about an efficient energy and mass transfer between the fluids. Furthermore, it is characterized also in that it integrates the suction function for taking in the gaseous fluid in association with the gas-liquid centrifugation effect, so as to bring about the collection or admission of a gaseous fraction with the concomitant liquid mixture in such a way as to achieve an interaction which maximizes the chemical reactions as well as the energy and mass transfer effects.

The process according to the invention is further characterized in that it promotes an amplitude equalization of the molecular vibrations of the fluids in different physical phases, through cooling, heating or kinetic energization, so as to favour the molecular interaction that increases the degree of conversion of chemical reactions, such as neutralization, oxidation and combination; it is additionally characterized in that it also comprises a reverse cyclonic effect for separating the gaseous and liquid fluids that have previously been mixed in a rotary element and are conveyed with a vortex effect in the same direction as the flow, in a gradually expanding cross-section area, with a spiralling flow outlet and in full absence of any effect of re-entrainment of droplets of the suspended liquid in the gaseous stream.

The present invention also refers to an apparatus for carrying out the above cited process, including a rotary element which is arranged inside a first portion of a housing and has passages in its peripheral wall, as well as vertical vanes in its interior, above and around said rotary element being there arranged an upper sprinkler and a side sprinkler that are supplied with liquid delivered by a pump from a tank, wherein a cyclone is connected, at one of its ends, to the liquid storage tank, while at its other end it is open to the atmosphere, wherein said rotary element and said pump are driven by a single and same motor, the end of the upper sprinkler being such as to penetrate the inner space of the rotary clement and the housing being a construction with two half-lobes joined by a pipe and carrying the cyclone, which has an overall funnel shape in the direction of its end opening into the atmosphere, as well as an inner conical baffle in its lower portion.

The afore cited rotary element is provided with particularly profiled vanes and, peripherally, with passages having typical configurations to bring about a simultaneous effect of gas suction, gas centrifugation with liquid and fractionation of the resulting mixture during ejection through said passages.

The afore cited housing is a construction formed essentially by two half-lobes having a volute-like shape and frontally opposing each other, said rotary element being housed in one of said volute-shaped half-lobes and the gradually expanding, funnel-shaped conical cyclone being on the contrary housed in such other volute-shaped half-lobe, said cyclone being provided with an inner volute, with a variable flow passage section and serving as a flow guide, and with the central conical baffle adapted to promote the separation of the liquid phase from the gaseous one.

The afore cited cyclone having essentially a pear-like shape serves the purpose of separating gaseous phases from the liquid ones with a variable flow passage cross-section area through a volute which opens into the base of the cone in a free zone, which contains a conical baffle adapted to prevent the liquid from being re-entrained in the gaseous stream, installed on the bottom portion of the cyclone so as to separate the liquid surface of the hydraulic seal from the turbulent tract of the gaseous stream exhausted through a conduit that acts as the inner perimeter of the volute.

Thus, the invention has a first advantage in that the above illustrated configuration of the housing, with two half-lobes and the rotary element in the first one of said half-lobes, is such as to cut flow resistance, or head loss, by approx. 50 percent as compared with prior-art equipment, so as to enable gases to flow in a much smoother way and the efficiency of the equipment to be sharply boosted.

The second advantage of the invention derives from the fact that use is made only of a single electric motor to drive both the pump and the rotary element, so that manufacturing and maintenance costs are reduced.

A third advantage of the invention derives from the fact that the gases which are inside the rotary element are much more intensively and efficiently bombarded with liquid once that the end of the upper sprinkler is inserted in the inner space of the rotary element. With this configuration, the sprinkler situated at the centre of the gaseous mass bombards the same mass from inside its periphery, enabling a optimum-quality mixture to be centrifugated.

There is a fourth, fundamental advantage of this invention deriving from the fact that the cyclone has a pear-like shape, that is, starting from a lower cone, another cone extending toward the atmosphere is arranged opposite thereto. This configuration is responsible for the new, efficient concept of gas-liquid separation by means of rotary effects induced by the housing in the shape of two half-lobes, which is instrumental in considerably reducing the flow resistance, or head loss, enabling in this way the efficiency and effectiveness of the process to be drastically improved.

The fifth advantage of the present invention derives from the fact that the cyclone is provided internally, in its lower portion, with a conical baffle which, owing to both its conical shape with a central opening and its circumferentially spaced arrangement with respect to the walls of the cyclone, has the ability of enhancing the effect of separating the liquid from the air.

The invention will be more readily understood on the basis of the description that is given below by way of non-limiting example with reference to the accompanying drawings, in which:
- Figure 1 is a full front view of the equipment according to the present invention, partially cross-sectioned to show internal component parts;
- Figure 2 is a view of the rotary element, the distribution and the type of the passages thereof, as well as the types of vertical vanes;
- Figure 3 is the same view as in Figure 1, however showing the motor situated in a different position;
- Figure 4 is a top view of the housing and the cyclone; and

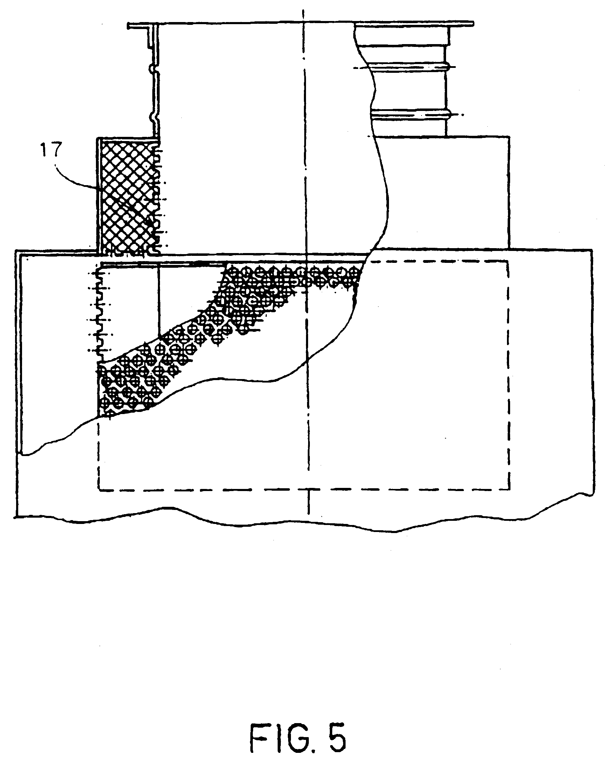

- Figure 5 shows a detail of the sound absorption system with its anechoic cavities.

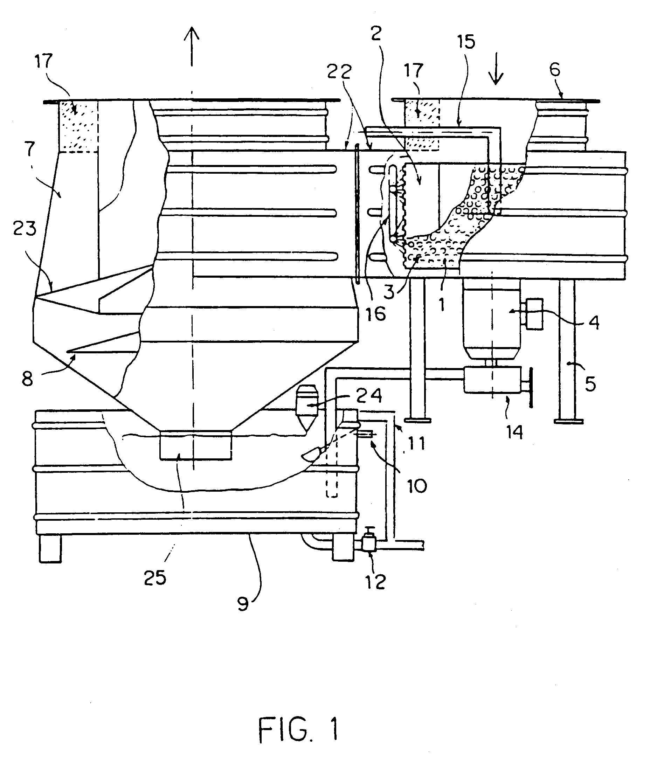

Figure 1 is shown to represent a view of the whole apparatus where, on the left side, a downwards directed arrow can be noticed indicating the admission flow of gases or polluted air. Said Figure further illustrates the rotary element 1 with the air suction vanes 2 and the passages 3 that are arranged all along the periphery or perimeter of the same rotary element.

Said rotary element is mounted inside a first section, or half-lobe, of a housing 6 which is supported by a structure 5. On the side and on top of said rotary element 1 there are provided liquid sprinklers 15 and 16, respectively, which are supplied with a liquid taken from a storage tank 9. Said liquid, which may for instance be constituted by water, is delivered by a pump 14 that is driven, jointly with said rotary element 1, by means of an electric motor 4.

Thus, when operating, said electric motor causes the rotary element 1 to rotate so that it, through the action of its vanes 2, takes in the polluted air or gas. Once inside the rotary element 1, the gas is then bombarded with atomized liquid sprayed by the sprinkler 15. The end of the sprinkler 15 is inserted in the centre of the gaseous mass and this is instrumental in considerably improving the mixing effect and the adhesion of the liquid droplets with the solid gas particles. Subsequently, the rotation of the rotary element 1 causes said mixture to be centrifugated and expelled through the passages 3 to be bombarded frontally, immediately thereafter, by new jets of liquid sprayed by the sprinklers 16 arranged all around the rotary element 1. Upon this second bombardment, the mixture is impelled, through the pipe 22, by the cyclone 7 so that a separation occurs of the treated air from the liquid carrying the residues. Inside the cyclone 7, the mixture is whirled downwards, whereby the separation takes place.

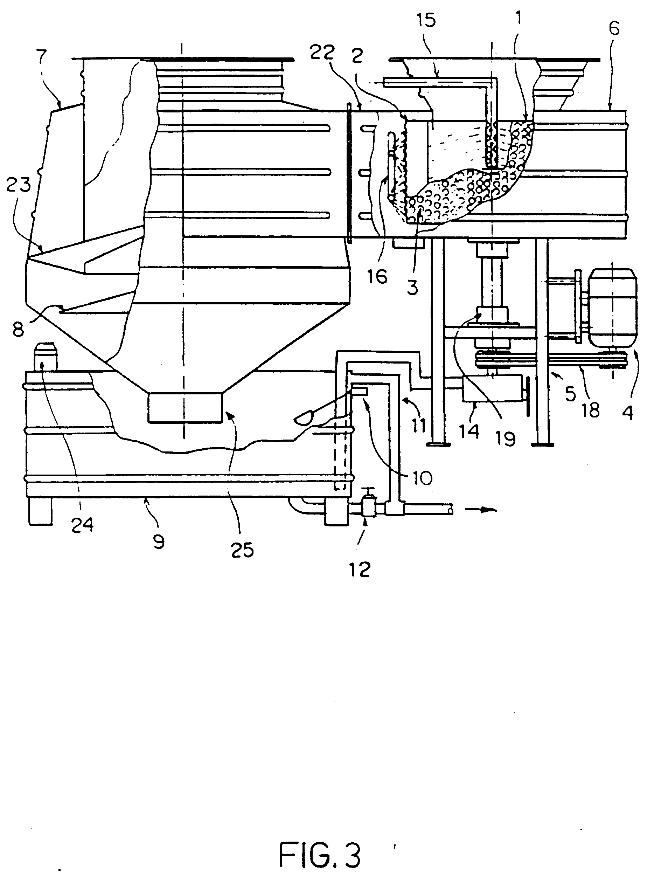

The cyclone 7 has a variable flow passage cross-section area through a volute 23, which opens into the base of the cone in a free zone (see, Figures 1 and 3).

In the lower section of the cyclone 7 there is provided the conical baffle means 8 which completes said separation process and avoids an entrainment of liquid droplets during the upwards movement of the treated air flowing out of the cyclone.

The conical deflector 8 is arranged so as to show a circumferential clearance with respect to the walls of the cyclone 7. It further has an opening in its central zone, through which the liquid carrying the residues is made to flow. Thereafter, said liquid passes through a hydraulic seal 25 and flows on into the recirculation tank 9 where it settles.

Figure 1 further shows the chemical additive reservoir 24, which is installed above the tank 9, along with connections for filling level detection means 10, channel pipe 11 and valve 12, the latter being either manually or electromechanically controlled, time controlled or not. The reservoir 24 may also be provided with a time-controlled solenoid-type valve. Finally, a detail of the sound-proofing provision 17 of both the housing and the cyclone can be noticed.

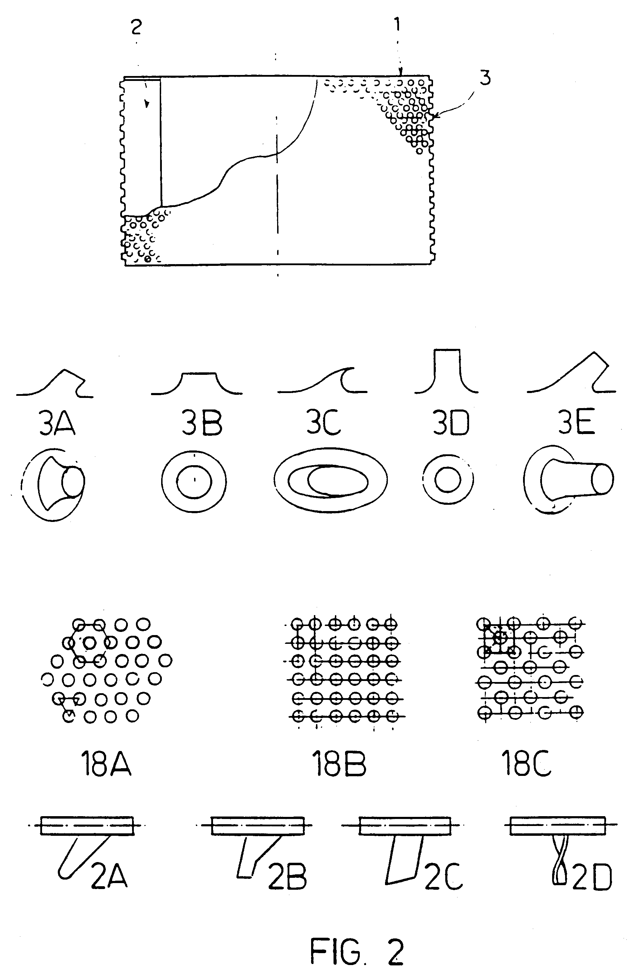

Figure 2 illustrates various configurations of the passages 3 of the rotary element 1. The passage configuration 3a, with a short conical shape, favours a larger passage area with an excellent aerodynamic disengagement. The passage configuration 3b, with a droplet-like shape, maximizes the efficiency of discharge in the direction of rotation of the rotary element 1. The passage configurations 3c (fishscale-type), 3d (truncated cone shape) and 3e (parallelly skew type) are also instrumental in considerably boosting the mechanical energetic mixing effect on the liquid and gaseous fluids involved.

The same Figure further illustrates some examples of arrangement 18a through to 18c of said passages, along with some types of vanes 2a through to 2d that may be used inside the rotary element 1. All these configurations are adapted to increase the efficiency of the equipment according to the desired effect and the intended application.

Figure 3 is similar to Figure 1, with the exception of the motor 4 which is given a different position, so that it is no longer coaxial with the pump 14 and the rotary element 1. When arranged according to this configuration, the motor therefore requires a driving belt 18 to transfer its motion.

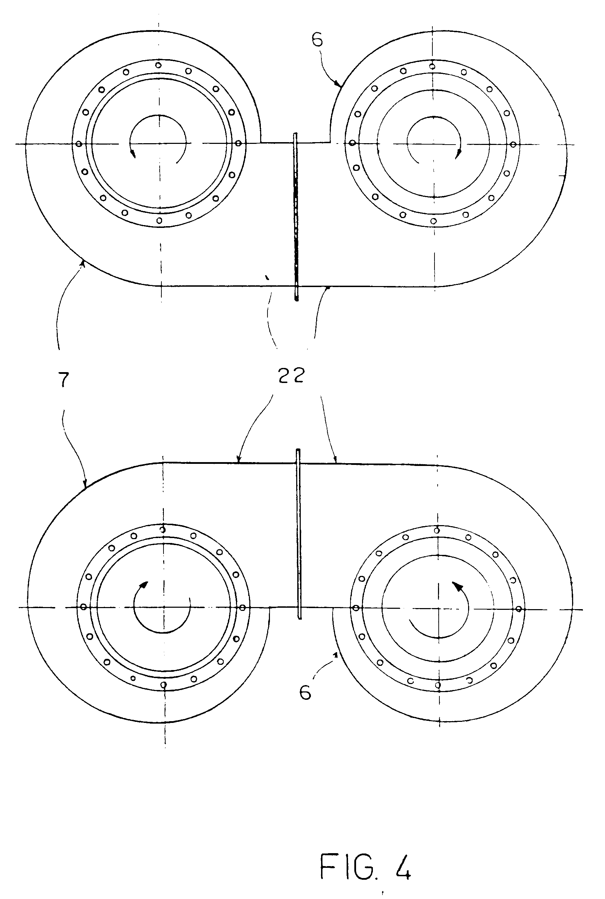

Figure 4 is a partial top view of the equipment showing in particular the housing 6 with its two half-lobes joined to each other by means of the pipe 22.

Further to the afore illustrated embodiments, the same concept of the invention may be applied, for instance, to the purification or anti-polluting treatment of exhaust oils, grease, fumes of professional kitchens, as well as solvent or paint mists and fumes from painting booths, including combustible streams, where the fundamental, exclusive advantage is offered of an effective fire prevention action owing to the continuous and immediate removal of combustible contaminants therefrom.

Further fundamental applications of the invention can be seen in the reactive processing of liquid or gaseous substances, as a replacement for the commonly used current-type or countercurrent-type reaction towers, or as a heat-exchanger in refrigeration, heating, air-conditioning, humidification and similar processes, owing to the efficient exchange occurring between the fluids.

## Claims

1. Process for the treatment of fluids, in particular for the purification of environment polluting emissions, including fluids in different phases as in the treatment of polluting gases; said process comprising a turbulent mixing of multiple fractions of the fluids being processed, an associated gas/liquid centrifugation effect and a kinetic energisation of the fluid particles, and being,
**characterized in that**
kinetic energisation of the polluting fluids is carried out by forcing the fluids to pass through a perforated wall, said fluids being sprayed with liquids before and after said passage, then the fluids are allowed to expand in a cyclone for separating solid and liquid particles.

2. Equipment to carry out the process defined in claim 1, **characterized** in that it includes a rotary element (1) which is arranged inside a first portion of a housing (6) and has passages (3) in its peripheral wall, as well as vertical vanes (2) in its interior, above and around said rotary element being there arranged an upper sprinkler (15) and a side sprinkler (16) that are supplied with liquid delivered by a pump (14) from a tank (9), wherein a cyclone (7) is connected at one of its ends to the liquid storage tank (9), while at its other end it is open to the atmosphere, wherein said rotary element (1) and said pump (14) are driven by a single and same motor (4), the end of the upper sprinkler (15) penetrating the inner space of the rotary element (1) and the housing (6) being a construction with two half-lobes joined by a pipe (22) and carrying the cyclone (7), which has an overall funnel shape in the direction of its end opening into the atmosphere, as well as an inner conical baffle (8) in its lower portion.

3. Equipment according to claim 2, **characterized** in that the rotary element (1) is provided with vanes (2a, 2b, 2c, 2d) and, peripherally, with passages (3a, 3b, 3c, 3d, 3e), which are capable of bringing about a simultaneous effect of gas intake, gas centrifugation with a liquid, and fractionation of the resulting mixture during ejection through said passages (3).

4. Equipment according to claim 2, **characterized** in that the housing (6) is a construction formed essentially by two half-lobes having a volute-like shape and frontally opposing each other, said rotary element (1) being housed in one of said volute-shaped half-lobes and the gradually expanding, pear-shaped conical cyclone (7) being on the contrary housed in such other volute-shaped half-lobe, said cyclone (7) being provided with an inner volute (23), having a variable flow passage section and serving as a flow guide, and with the central conical baffle (8) adapted to promote the separation of the liquid phase from the gaseous one.

5. Equipment according to claim 2, **characterized** in that it includes a cyclone (7) with an essentially pear-like shape for separating the gaseous phase from the liquid one, said cyclone (7) having a variable flow passage cross-section area through a volute (23) which opens into the base of the cone in a free zone, and containing a conical baffle (8) adapted to prevent the liquid from being re-entrained in the gaseous stream installed on the bottom portion of the cyclone so as to separate the liquid surface of the hydraulic seal from the turbulent tract of the gaseous stream exhausted through a conduit that acts as the inner perimeter of the volute (23).

6. Equipment according to claim 2, **characterized** in that it includes sound absorbing means (17) incorporated in the inner structure of the two half-lobes of the housing (6), and consisting of a perforated metal construction with an anechoic configuration, capable of absorbing the sound amplitude of the flows being processed, said means being physically arranged in the inner side face of the intake opening and in the inner counter-surface of the half-lobe housing the rotary element (1), as well as in the inner surface of the discharge opening of the other half-lobe housing the pear-like shaped cyclone (7).

## Patentansprüche

1. Prozeß zur Behandlung von Fluiden, insbesondere zur Reinigung von umweltverschmutzenden Emissionen, einschließlich Fluiden in unterschiedlichen Phasen, wie bei der Behandlung von verschmutzenden Gasen, wobei der Prozeß eine Wirbelvermischung mehrerer Fraktionen der zu behandelnden Gase, einen damit verbundenen Gas/Flüssigkeits-Zentrifugiereffekt und eine Zufuhr kinetischer Energie in den Fluidteilchen umfaßt, **dadurch gekennzeichnet,** daß die Zufuhr kinetischer Energie zu den verschmutzenden Fluiden ausgeführt wird, indem die Fluide gezwungen werden, durch eine perforierte Wand hindurchzutreten, wobei die Fluide vor und nach dem Hindurchtreten mit Flüssigkeiten besprüht werden, sich die Fluide anschließend in einem Zyklon ausdehnen können, um feste und flüssige Teilchen zu trennen.

2. Einrichtung zum Ausführen des in Anspruch 1 definierten Prozesses, **dadurch gekennzeichnet,** daß sie ein Drehelement (1) enthält, das im Inneren eines ersten Abschnitts eines Gehäuses (6) angeordnet ist und Durchlasse (3) in seiner Umfangswand sowie vertikale Flügel (2) in seinem Inneren aufweist, wobei über dem Drehelement und um selbiges herum eine obere Sprühvorrichtung (15) und eine seitliche Sprühvorrichtung (16) angeordnet sind, denen von einer Pumpe (14) aus einem Tank (9) abgegebene Flüssigkeit zugeführt wird, wobei ein Zyklon (7) an einem seiner Enden mit dem Flüssigkeitsvorratstank (9) verbunden ist, während er an seinem anderen Ende zur Atmosphäre hin offen ist, wobei das Drehelement (1) und die Pumpe (14) von ein und demselben Motor (4) angetrieben werden, das Ende der oberen Sprühvorrichtung (15) in den Innenraum des Drehelementes (1) eindringt und das Gehäuse (6) eine Konstruktion mit zwei Halbkapseln ist, die durch ein Rohr (22) miteinander verbunden sind und den Zyklon (7) tragen, der in der Richtung seines Endes, das sich zur Atmosphäre hin öffnet, die Gesamtform eines Trichters hat, sowie eine innere konische Ablenkvorrichtung (8) in seinem unteren Abschnitt.

3. Einrichtung nach Anspruch 2, **dadurch gekennzeichnet,** daß das Drehelement (1) mit Flügeln (2a, 2b, 2, 2d) versehen ist und in Umfangsrichtung mit Durchlassen (3a, 3b, 3c, 3d, 3e), mit denen gleichzeitig Gas angesaugt, Gas mit einer Flüssigkeit zentrifugiert und das entstehende Gemisch beim Ausstoß durch die Durchlasse (3) fraktioniert werden kann.

4. Einrichtung nach Anspruch 2, **dadurch gekennzeichnet,** daß das Gehäuse (6) eine Konstruktion ist, die im wesentlichen durch zwei Halbkapseln gebildet wird, die eine schneckenartige Form haben und einander frontal gegenüberliegen, wobei das Drehelement (1) in einer der schneckenförmigen Halbkapseln aufgenommen ist und der sich allmählich ausdehnende birnenförmige konische Zyklon (7) hingegen in der anderen schneckenförmigen Halbkapsel aufgenommen ist, wobei der Zyklon (7) mit einer inneren Schnecke (23) versehen ist, die einen veränderlichen Strömungsdurchlaßquerschnitt hat und als Strömungsführung dient, sowie mit der mittleren konischen Ablenkvorrichtung (8), die die Trennung der flüssigen Phase von der gasförmigen fördert.

5. Einrichtung nach Anspruch 2, **dadurch gekennzeichnet,** daß sie einen Zyklon (7) mit einer im wesentlichen birnenartigen Form enthält, der die gasförmige Phase von der flüssigen trennt, wobei der Zyklon (7) einen veränderlichen Strömungsdurchlaßquerschnitt durch eine Schnecke (23) hindurch hat, die sich in den untere Teil des Kegels in einem freien Bereich öffnet, und er eine konische Ablenkvorrichtung (8) enthält, die verhindert, daß die Flüssigkeit in dem gasförmigen Strom wieder mitgerissen wird und die im unteren Abschnitt des Zyklons so installiert ist, daß die Flüssigkeitsoberfläche des hydraulischen Dichtung von dem Wirbeltrakt des gasförmigen Stroms getrennt wird, der über eine Leitung ausgestoßen wird, die als der Innenumfang der Schnecke (23) wirkt.

6. Einrichtung nach Anspruch 2, **dadurch gekennzeichnet,** daß sie Schalldämpfeinrichtungen (17) enthält, die in den Innenaufbau der beiden Halbkapseln des Gehäuses (6) integriert sind und aus einer perforierten Metallkonstruktion mit reflexionsfreiem Aufbau bestehen, die die Schallamplitude der Ströme absorbieren kann, die behandelt werden, wobei die Einrichtungen physisch an der Innenseitenfläche der Einlaßöffnung und der inneren Gegenfläche der Halbkapsel, die das Drehelement (1) aufnimmt, angeordnet sind und darüber hinaus an der Innenfläche der Ausstoßöffnung der anderen Halbkapsel, die den birnenartig geformten Zyklon (7) aufnimmt.

## Revendications

1. Procédé de traitement de fluides, en particulier pour la purification d'émissions polluantes pour l'environnement, comprenant des fluides en différentes phases, comme lors du traitement de gaz polluants, ledit procédé comprenant un mélange turbulent de multiples fractions des fluides traités, un effet de centrifugation gaz/liquide associé et une activation cinétique des particules de fluides, caractérisé en ce que l'activation cinétique des fluides polluants est effectuée en forçant les fluides à passer à travers une paroi perforée, lesdits fluides étant pulvérisés avec des liquides avant et après ledit passage, les fluides étant ensuite laissés se dilater dans un cyclone pour séparer les particules solides et liquides.

2. Équipement pour mettre en oeuvre le procédé défini à la revendication 1, caractérisé en ce qu'il comprend un élément rotatif **(1)** qui est placé à l'intérieur d'une première partie du boitier **(6)** et possède des passages **(3)** dans sa paroi périphérique, ainsi que des ailettes verticales **(2)** en son intérieur, un pulvérisateur supérieur **(15)** et un pulvérisateur latéral **(16)** étant placés au-dessus et au-dessous dudit élément rotatif, lesquels pulvérisateurs sont alimentés en liquide fourni par une pompe **(14)** depuis un réservoir **(9)**, dans lequel un cyclone **(7)** est relié à l'une de ses extrémités au réservoir de stockage de liquide **(9)**, alors qu'il est ouvert sur l'atmosphère à son autre extrémité, dans lequel ledit élément rotatif **(1)** et ladite pompe **(14)** sont entraînés par un seul et même moteur **(4)**, l'extrémité du pulvérisateur supérieur **(15)** pénétrant dans l'espace intérieur de l'élément rotatif **(1)** et le boitier **(6)** étant une structure à deux demi-lobes joints par une conduite **(22)** et portant le cyclone **(7)**, qui a une forme globale en entonnoir dans la direction de son extrémité ouverte sur l'atmosphère, ainsi qu'un déflecteur intérieur conique **(8)** dans sa partie inférieure.

3. Équipement selon la revendication 2, caractérisé en ce que l'élément rotatif **(1)** est muni d'ailettes **(2a, 2b, 2c, 2d)** et, sur la périphérie, de passages **(3a, 3b, 3c, 3d, 3e)** qui sont capables de produire un effet simultané d'admission de gaz, de centrifugation de gaz avec un liquide et de fractionnement du mélange obtenu au cours de son éjection à travers lesdits passages **(3)**.

4. Équipement selon la revendication 2, caractérisé en ce que le boîtier **(6)** est une structure formée essentiellement de deux demi-lobes ayant une forme de type volute et se faisant face frontalement, ledit élément rotatif **(1)** étant logé dans l'un desdits demi-lobes en forme de volute et le cyclone conique piriforme **(7)** s'élargissant progressivement étant logé au contraire dans l'autre demi-lobe en forme de volute, ledit cyclone **(7)** étant muni d'une volute intérieure **(23)** ayant une section de passage d'écoulement variable et servant de guide d'écoulement, et le déflecteur central conique **(8)** étant adapté pour favoriser la séparation de la phase liquide depuis la phase gazeuse.

5. Équipement selon la revendication 2, caractérisé en ce qu'il comprend un cyclone **(7)** de forme essentiellement piriforme pour séparer la phase gazeuse de la phase liquide, ledit cyclone **(7)** ayant une aire de section transversale de passage d'écoulement variable à travers une volute **(23)** qui débouche dans la base du cône dans une zone libre, et contenant un déflecteur conique **(8)** adapté pour empêcher le liquide d'être ré-entraîné dans le courant gazeux instauré sur la partie inférieure du cyclone en sorte de séparer la surface liquide du joint hydraulique de canal turbulent du courant gazeux rejeté à travers un conduit qui sert de périmètre intérieur de la volute **(23)**.

6. Équipement selon la revendication 2, caractérisé en ce qu'il comprend des moyens d'absorption acoustique **(17)** incorporés dans la structure intérieure des deux demi-lobes du boitier **(6)**, et consistant en une structure métallique perforée à configuration anéchoïque, capable d'absorber l'amplitude sonore des écoulements en cours de traitement, lesdits moyens étant physiquement agencés dans la face latérale intérieure de l'ouverture d'amission et dans la contre-surface intérieure du demi-lobre qui abrite l'élément rotatif **(1)**, ainsi que dans la surface intérieur de l'ouverture d'évacuation de l'autre demi-lobe qui abrite le cyclone piriforme **(7)**.
